# EUROPEAN PATENT SPECIFICATION

(11) **EP 4 046 869 B1**
(45) Date of publication and mention of the grant of the patent: **14.02.2024**
(21) Application number: 21157803.4
(22) Date of filing: 18.02.2021
(51) Int. Cl.: B60Q 3/14, B60Q 3/54

(54) **BACKLIGHT ASSEMBLY FOR VARYING OPTICAL CHARACTERISTIC COMPONENTS**
HINTERGRUNDBELEUCHTUNGSANORDNUNG FÜR KOMPONENTEN MIT UNTERSCHIEDLICHEN OPTISCHEN EIGENSCHAFTEN
ENSEMBLE DE RÉTRO-ÉCLAIRAGE POUR COMPOSANTS À CARACTÉRISTIQUES OPTIQUES VARIABLES

(43) Date of publication of application: 24.08.2022
(73) Proprietor: Motherson Innovations Company Limited, London EC2N 2AX (GB)
(72) Inventor: Dreyer, Xavier, 67100 Strasbourg (FR)
(74) Representative: Westphal, Mussgnug & Partner Patentanwälte mbB

(56) References cited:
- EP-A1- 1 839 945
- US-A1- 2004 239 750
- US-A1- 2015 210 226
- US-A1- 2018 045 826
- US-B1- 6 318 872

## Description

### FIELD

The present invention is directed to a backlight assembly with components having different optical characteristics. Moreover, the present invention relates to a vehicle comprising such a backlight assembly.

### BACKGROUND

The statements in this section merely provide background information related to the present invention and may not constitute prior art.

Backlight components are playing an increasingly important role in the interior and exterior design of a vehicle. Non-exhaustive examples of external cladding components which could be backlit are front grilles, side skirts, bumpers, tailgates and spoilers. Non-exhaustive examples of internal backlit components are instrument panels, door panels, center consoles and internal trims. Typically the backlit components are made by injection molding, however, within the present invention the components are not limited to injection molded parts and can for example be made of metal, glass or the like having optical light transmission characteristics.

In order to enhance the operation safety, vehicles are being equipped with external cladding components utilized to display information outside the vehicle and interior components to provide lighting and display information. Backlighting through a component allows for displaying of information or lighting when the light source is energized. When the light source is not energized seamless uniform interior or exterior surface can be provided. When backlighting is used for two components with different optical characteristics arranged side by side, a visible color variation may occur between the light emitted from each component as viewed when the light source is illuminated. This is a result of the light transmitted through the dissimilar materials differently creating a non-homogenous appearance between the emitted light viewed from each component. The visible light color variation may be distracting and create an impression of poor quality or design.

US 2015/0210226 A1 discloses a vehicle trim element has a panel that includes at least one colored mask having solid areas and at least one aperture delimiting a pattern, and a colored screen transmitting light and closing each aperture of the mask. Further documents disclosing the relevant prior art are EP 1 839 945 A1, US 6 31 8 872 B1 and US 2004/239750 A1.It is one task of the present invention to present a vehicle backlighting assembly with at least two components having different optical characteristics to produce a homogeneous light appearance when the light emitting device is turned on and a homogeneous surface appearance when the light emitting device is turned off.

### SUMMARY

According to an embodiment a backlighting assembly for a vehicle, comprises
- a first member, wherein the first member has a first optical characteristic curve which is the transmittance percentage in function of the wavelength;
- a second member adjacent to the first member, wherein the second member has a second optical characteristic curve which is the transmittance percentage in function of the wavelength, the second optical characteristic curve differing from the first optical characteristic curve;
- the first member and the second member being arranged side by side;
- a film adhered to the first member; and
- a light emitting device emitting a beam of light, wherein the light emitting device is positioned for a beam of light to partially impinge on the second member and partially impinge the film;
- wherein the film provides light spectrum modification of the beam of light from the light emitting device across the visible light spectrum to create a modified beam of light which impinges the first member;
- wherein the light spectrum modification is determined from a transmittance variance between the first optical characteristic curve of the first member and the second optical characteristic curve of the second member such that a common light emitting device can be used for both members where the output transmitted light through the first and second members has a homogenized appearance for an observer.

The film provides a light spectrum modification to the light impinging on the first member by altering the beam of light from the light source before the light impinges the first member. This modification allows a common light source to be used for both members where the output transmitted light through the first and second members has a homogenized appearance.

In accordance with a further embodiment the light spectrum modification may be an optical characteristic to absorb and/or reflect a selected light spectrum.

The appearance of the backlight spectrum visible through the first member is to be homogenous with the backlight spectrum through the second member. The film provides a light spectrum modification to the light impinging on the first member to correct the output backlight spectrum visible through the first member. In order to provide the light spectrum modification, the film reduces and/or eliminates a determined light spectrum from reaching the surface of the first member. The film is chosen with an optical characteristic to absorb and/or reflect a determined light spectrum to prevent this determined light spectrum from impinging the inner surface of the first member.

According to another embodiment the light spectrum modification is determined from a transmittance variance between the first optical characteristic of the first member and the second optical characteristic of the second member.

Determining the transmittance variance between the emitted backlight spectrum though the first member compared to the backlight spectrum of the second member indicates where the optical characteristics of the first member deviate from the optical characteristics of the second member. The film optical characteristics are then chosen to using the transmittance variance between the light spectrum of the first member and the second member. The film optical characteristics in combination with the optical characteristics of the first member will produce a backlight spectrum to be visually indistinguishable from the backlight spectrum of the second member.

According to another embodiment the film further comprises at least two film layers to provide the light spectrum modification

The optical characteristics needed to provide the light spectrum modification to the beam of light may be complex. When the complexity of the modification is increased, a single film may not have all the optical characteristics to provide the entire desired light modification. A film with at least two film layers, each having different optical characteristics, may cooperate to provide the desired light spectrum modification.

According to another embodiment, the first member and the second member are opaque with at least one light transmitting recess.

Backlighting can be used to display information on the surface. By having opaque areas and light transmitting recesses, information can be displayed in graphic form on the surface of the first and second members when the light source is energized.

According to another embodiment the at least one light transmitting recess is a circle, triangle, arrow, logo, emblem or words.

The light transmitting recess can be shaped based to display backlit information in recognizable form. Circles, triangles, arrows, logos, emblems and words are all recognizable shapes which can convey information when illuminated.

In accordance with a further embodiment the light emitting device is at least one light emitting diode (LED) source.

Light emitting diodes may be used in some applications. They provide a low heat light source and can be packaged with few constraints.

According to another embodiment the backlighting assembly further comprises a second film adhered to the second member, wherein the second film provides a second light spectrum modification of the beam of light from the light emitting device to create a second modified beam of light which impinges the second member.

In some applications, the difference between optical characteristics of the first member and the optical characteristics of the second member may complex or produce transmittance curves which overlap. Utilizing a film on the first member to provide a light modification in cooperation with a second film on the second member to provide a second light modification may provide a less complex solution for light spectrum modification than utilizing a film on the first member alone.

In accordance with a further embodiment the first member and the second member may be interior or exterior components.

Interior and exterior components may have a backlighting component which occurs through two components located side by side. The use of light spectrum modification to provide a homogenized output light spectrum may be applied to any multicomponent backlighting assembly.

It should be noted that the features set out individually in the following description can be combined with each other in any technically advantageous manner and set out other forms of the present invention. It should be understood, however, that the disclosure is not limited to the precise arrangements and instrumentalities shown. The accompanying drawings, which are incorporated in and constitute a part of this specification, illustrate an implementation of system, apparatuses, and methods consistent with the present description and, together with the description, serve to explain advantages and principles consistent with the disclosure. The figures are not necessarily drawn to scale. Like numbers used in the figures refer to like components. However, it will be understood that the use of a number to refer to a component in a given figure is not intended to limit the component in another figure labelled with the same number. The description further characterizes and specifies the present invention in particular in connection with the figures.

### DRAWINGS

In order that the disclosure may be well understood, there will now be described various forms thereof, given by way of example, reference being made to the accompanying drawings, in which:
Figure 1a is a side view through an existing backlighting assembly,
Figure 1b is a front view of an existing illuminated backlighting assembly,
Figure 2 is a graphical representation of the optical characteristics of the components of Figure 1a,
Figure 3a is a side view through a first embodiment of a backlighting assembly according to the present invention,
Figure 3b is a front view of an illuminated backlighting assembly according to the present invention,
Figure 4 is a side view through a second embodiment of a backlighting assembly according to the present invention,
Figure 5 is a side view through a third embodiment of a backlighting assembly according to the present invention,
Figure 6 is a front view of a non-illuminated backlighting assembly for external cladding components according to the present invention,
Figure 7 is a front view of an illuminated backlighting assembly for external cladding components according to the present invention,
Figure 8 is a fourth embodiment of a backlighting assembly according to the present invention, and
Figure 9 is a graphical representation to achieve a homogenized output light appearance for the third embodiment according to the present invention.

### DETAILED DESCRIPTION

The following description is merely exemplary in nature and is not intended to limit the present invention, application, or uses. It should be understood that throughout the drawings, corresponding reference numerals indicate like or corresponding parts and features.

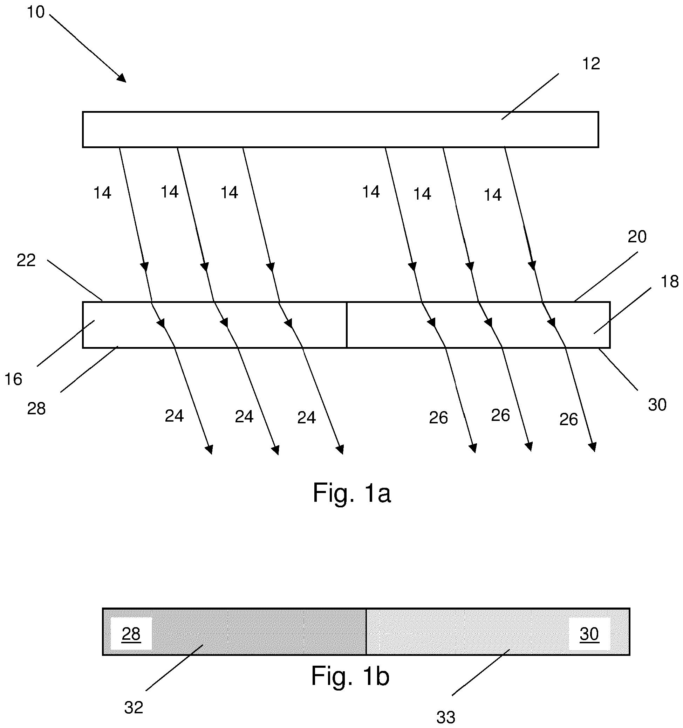

Figure 1a illustrates a side view of an existing backlighting assembly 10 according to the prior art. A light emitting device 12 emits a beam of light 14 which at least partially impinges on an inner surface 22 of a first member 16 and at least partially impinges on an inner surface 20 of a second member 18. The first member 16 is arranged side by side to the second member 18 in Figure 1. The first and second members 16, 18 may be any part used in exterior cladding applications such as bumpers, side skirts, tailgates, A-pillars, B- pillars, spoilers and the like. The first and second members 16, 18 may also be interior components used in applications such as instrument panels, consoles, door trim panels and the like. The light emitting device 12 may be a light emitting diode (LED) source. The light emitting device 12 may also have multiple light sources (not shown). The light emitting device 12 may also contain a light guide with one or more LED's coupled to the light guide where the light guide could be of a material with light transmission properties such as PMMA, PC, or glass as non-limiting examples.

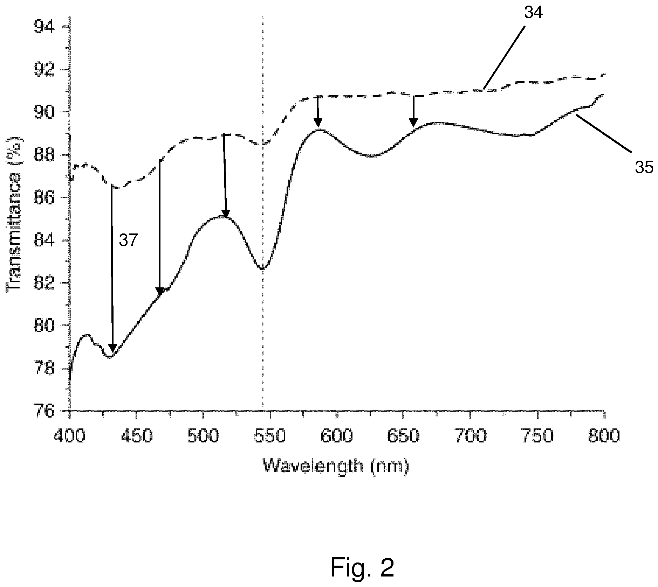

The material optical characteristics of the first member 16 are dissimilar from the material optical characteristics across the light spectrum of the second member 18 (Figure 2). Optical characteristics include transmissivity, reflectivity and absorptivity. Therefore when the beam of light 14 impinges on the inner surface 22 a portion of the beam of light 14 may be reflected and/or absorbed and/or transmitted through the material of the first member 16. The beam of light 14 is transmitted through the first member 16 according to its optical characteristics producing a first external beam of light 24 with a first light spectrum visible through the outer surface 28. In one example, the first member 16 may absorb a particular light spectrum as the beam of light 14 passes through the first member 16.

Similarly, when the beam of light 14 impinges the inner surface 20 of the second member 18, a second external beam of light 26 with a second light spectrum visible through an outer surface 30 is created by the material optical characteristics of the second member 18. In particular, the output light spectrum contrast between the first and second external beams of light 24, 26 may be due to the absorption of a particular light spectrum in the material of the second member 18 which is not absorbed by the material of the first member 16 as the beam of light 14 is transmitted through the different optical characteristics of the first and second members 16, 18. The light spectrum of the first external beam of light 24 is viewed as a first light spectrum color 32 and the second external beam of light 26 is viewed as a second light spectrum color 33. Figure 1b illustrates the visible contrast between the first light spectrum color 32 visible through the outer surface 28 and the second light spectrum color 33 visible through the outer surface 30. This contrast is created by the different optical characteristics between the first member 16 material and the second member 18 material. The contrast in light spectrum colors creates a non-homogenized appearance in the backlighting assembly 10 viewing when the light emitting device 12 is energized. As illustrated in Figure 1b, the first light spectrum color 32 is visibly distinct from the second light spectrum color 33 which may detract from the overall design aesthetic and/or give the impression of poor quality.

Figure 2 illustrates an exemplary graphical representation of a first optical characteristic curve 34 for the first member 16 and a second optical characteristic curve 35 for the second member 18 (Figure 1a). The first and second optical characteristic curves 34, 35 extends and may vary across the visible light spectrum. As shown in this example, the first optical characteristic curve 34 has distinct optical characteristics over the visible light spectrum when compared to the second optical characteristic curve 35 creating an optical characteristic variance 37. It is the optical characteristic variance 37 which produces the non-homogenized appearance between the first light spectrum color 32 and the second light spectrum color 33.

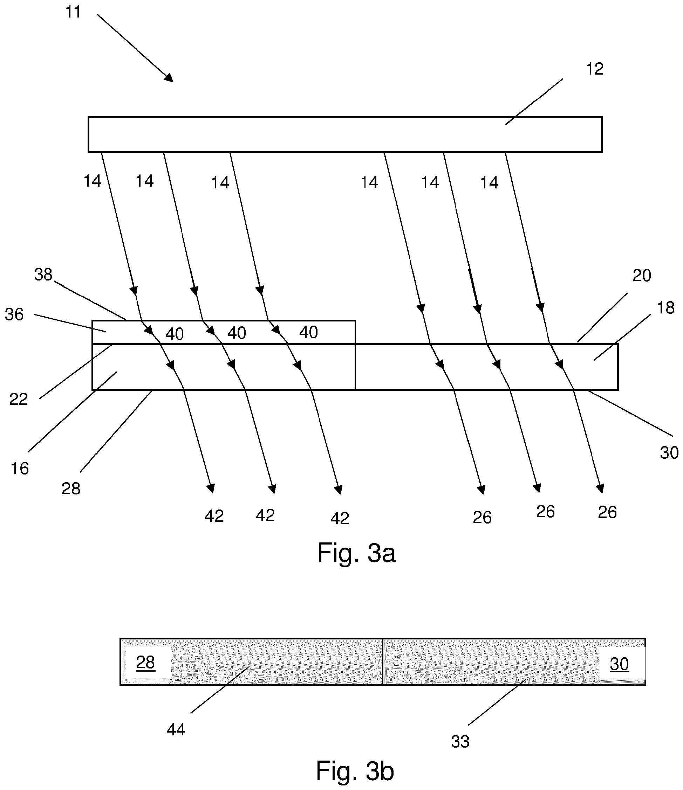

Figure 3a illustrates a side view of a first embodiment of the backlighting assembly 11. A film 36 is adhered to the inner surface 22 of the first member 16. The light emitting device 12 emits a beam of light 14 which at least partially impinges on an inner surface 38 of the film 36 and at least partially impinges on the inner surface 20 of the second member 18. The film 36 is characterized by optical characteristics to provide light spectrum modification to the beam of light 14 creating a modified beam of light 40. The modified beam of light 40 then impinges on the inner surface 22 of the first member 16. The modified beam of light 40 transmits according to the first optical characteristics through the first member 16 to create a modified external beam of light 42.

Figure 3b illustrates the modified external beam of light 42 visible through the outer surface 28 as a modified light spectrum color 44. The modified light spectrum color 44 is visually indistinguishable by an observer from the second light spectrum color 33 visible through the outer surface 30 creating a homogenized appearance. The second light spectrum color 33 from the second external beam of light 26 and modified light spectrum color 44 from the modified external beam of light 42 can be measured and compared using known color measuring techniques.

The film 36 in combination with the first member 16 creates a stack which will produce the visually similar output light spectrum for the input beam of light 14 as compared to the output light spectrum of the second external beam of light 26 of the second member 18.

The optical characteristics of the film 36 are determined by the first optical characteristics curve 34 as compared to the second optical characteristic curve 35. The optical characteristic variance 37 is the difference between the first optical characteristic curve 34 of the first member 16 and the second optical characteristic curve 35 of the second member 18 as shown in Figure 2. Utilizing the exemplary first and second optical characteristic curves 34,35 from Figure 2, the film 36 has film optical characteristics which when applied modify transmission of the first optical characteristic curve 34 to reach the second optical characteristic curve 35 and minimize the optical characteristic variance 37. An exemplary calculation for the film optical characteristics based on the first and second optical characteristic curves 34, 35, at 400 nm would be:
The first optical characteristic curve 34 of the first member 16 transmits 870 of the light at 400 nm while the second optical characteristics curve 35 transmits 780 of the light at 400 nm (Figure 2).

The film optical characteristics are selected to modify the 87% transmittal rate of the first member 16 to match the 780 transmittal rate through the second member 18. Therefore, the film 36 with 90% transmittance rate at 400 nm is applied on the first member 16 to reduce the transmittance rate of the first member 16. (90% x 870 = 78%). The optical characteristic variance 37 is used along the visible light spectrum to determine the optical characteristics of the film 36 in the visible spectrum.

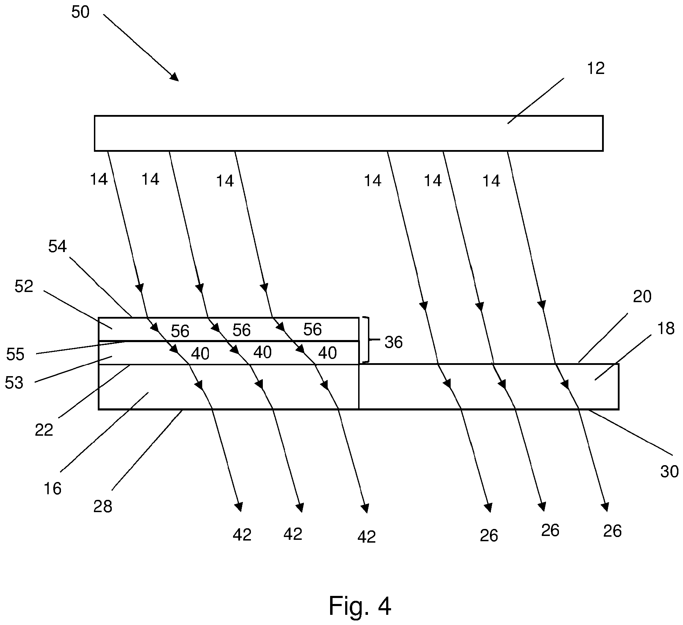

Figure 4 is a side view through a second embodiment of a backlighting assembly 50. In this second embodiment, the film 36 has at least two layers with different optical characteristics to produce a modified beam of light 40. A first film layer 52 and a second film layer 53 with different material optical characteristics cooperate to provide the desired light spectrum modification to the beam of light 14. The beam of light 14 impinges on an inner surface 54 of the first film layer 52. As the beam of light 14 is transmitted through the film layer 52 a modified beam of light 56 is produced and impinges on the inner surface 55 of the second film layer 53. This modified beam of light 56 is further modified by the optical characteristics of the second film layer 53 to produce the modified beam of light 40 which impinges on the inner surface of the first member 16. The modified beam of light 40 passes through the first member 16 and is altered based on the material optical characteristics of the first member to produce a first external beam of light 42. The first external beam of light 42 produces a first color 44 as describe in reference to Figure 3 which is virtually indistinguishable from the second light spectrum color 33.

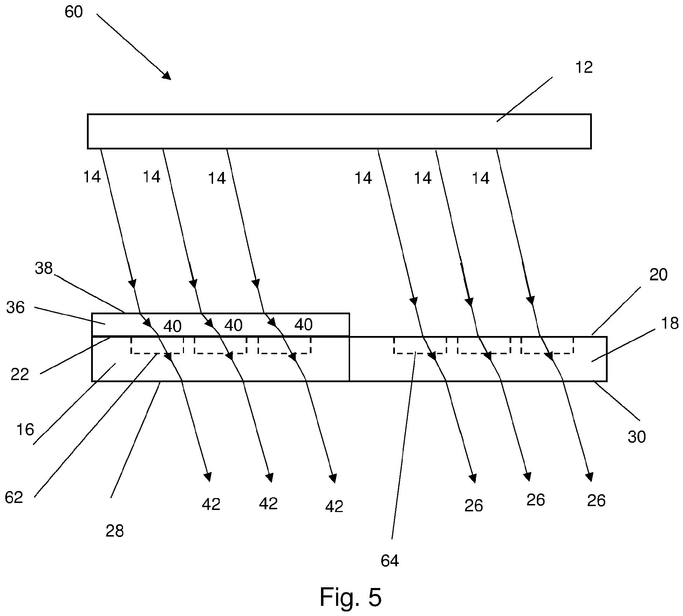

In Figure 5, a side view of a third embodiment of a backlighting assembly 60 is illustrated. The first member 16 has at least one first member recess 62 and the second member 18 has at least one second member recess 64. The at least one first member recess 62 and the at least one second member recess 64 may be formed when the first member 16 and/or second member 18 are manufactured. Alternatively, the at least one first and/or second member recesses 62, 64 may be created after manufacturing of the first and/or second member 16, 18 by removing material such as with a laser etching process or the like. The film 36 is adhered to the inner surface 22 of the first member 16 and provides a light spectrum modification to the beam of light 14 to produce the modified beam of light 40 as described above in relation to Figure 2, 3a and 3b. In this embodiment, the first member 16 and the second member 18 are opaque. The at least one first member recess 62 and the at least one second member recess 64 provide a reduced thickness sections in the first and second members 16, 18 which are capable to transmit light and provide a backlight effect. The modified beam of light 40 is only transmittable through the at least one first member recess 62 and the beam of light 14 is only transmittable through the at least one second member recess 64. The at least one first member recess 62 and at least one second member recess 64 will provide a specific geometry or pattern of light to be visible through the outer surfaces 28, 30 when the light emitting device 12 is illuminated. The geometry or shape of the at least one first member recess 62 and the at least one second member recess 64 may be any configuration such as triangles, arrows, circles, logos, emblems or words as non-limiting examples. The optical characteristics of the film 36 is calculated as described in the example above for the first embodiment of the backlighting assembly 11.

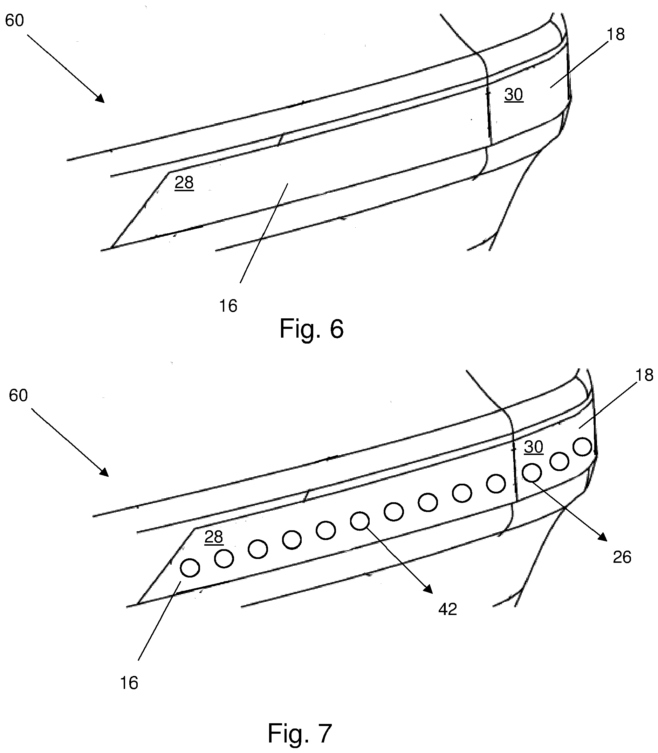

Figure 6 illustrates the third embodiment of the backlight assembly 60 when the light emitting device 12 (not shown) is not energized. When the light emitting device 12 is not energized, the appearance on the outer surfaces 28, 30 is uniform. Figure 7 illustrates the third embodiment of the backlight assembly 60 when the light emitting device 12 (not shown) is energized. When the beam of light 14 is transmitted through the first and second members 16, 18 at the first and second member recesses 62, 64, the beam of light 14 produces the modified external beam of light 42 and the second external beam of light (Figure 5). In this variation, the at least one first member recess 62 and at least one second member recess 64 are shaped to produce a circular backlighting effect for each recess. This creates the homogenized pattern of light visible on the outer surfaces 28, 30.

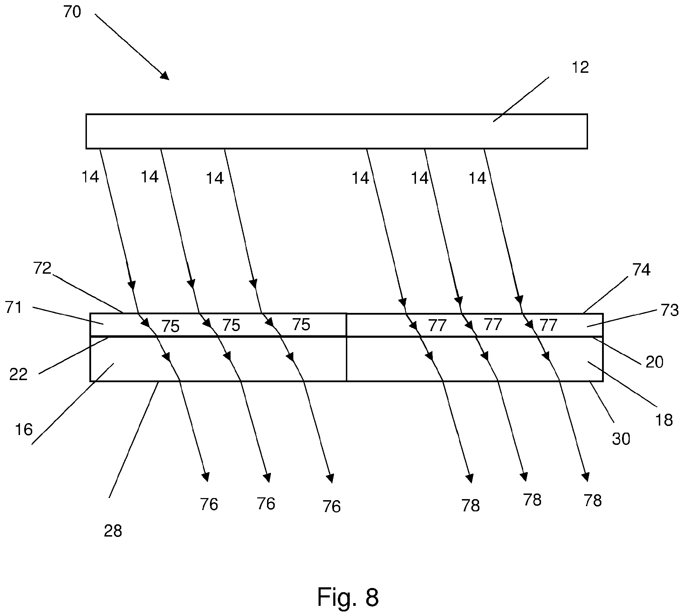

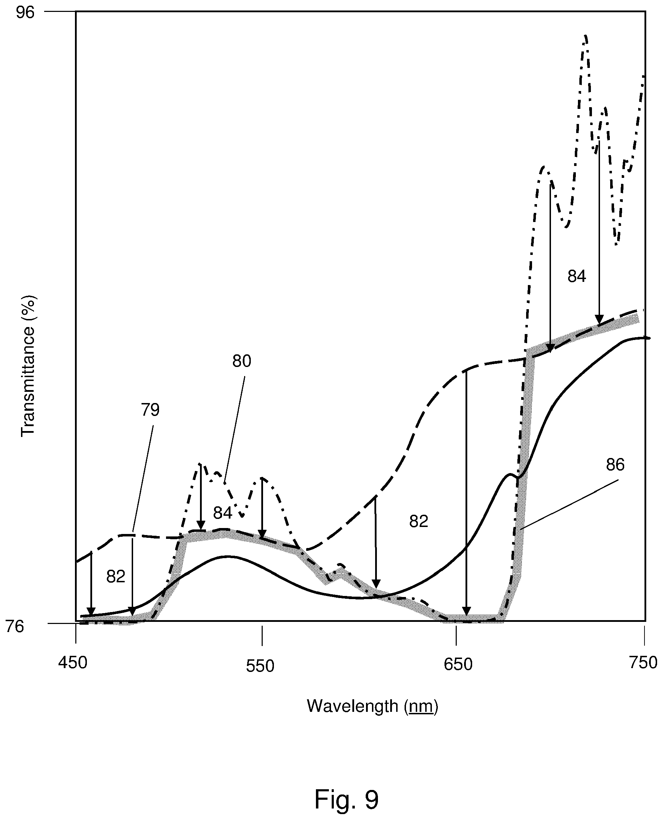

Figure 8 illustrates a fourth embodiment of the backlight assembly 70. In some applications, the difference between optical characteristics of the first member and the optical characteristics of the second member may complex or produce transmittance curves which overlap as shown in Figure 9. Utilizing a first member film 71 for light modification on first member 16 and a second member film 73 with different optical characteristics on the second member 18 may provide a less complex film solution for light spectrum modification than utilizing a film on a single member. In this variation, the first member 16 has a first member film 71 applied to the inner surface 22 and the second member 18 has a second member film 73 applied to the inner surface 20. The beam of light 14 passes through the first member film 71 creating a modified beam of light 75 according to the optical characteristics of the first member film 71. This modified beam of light 75 impinges on the inner surface 22 of the first member and creates a first external beam of light 76. The beam of light 14 impinges of the second inner surface 74 of the second member film 73. The second member film 73 provides a second light spectrum modification different from the first member film 71 to the beam of light 14 producing a second modified beam of light 77. This second modified beam of light 77 impinges on the inner surface 20 of the second member 18. The modified beam of light 77 transmits through the second member 18 producing a second modified external beam of light 78. The first modified external beam of light 76 has a light spectrum color which produces a homogenized appearance with the light spectrum color from the second modified external beam of light 78.

Figure 9 illustrates when the first member 16 optical characteristics and the second member 18 optical characteristics overlap at points in the visible light spectrum. When this variation occurs, the beam of light 14 will be altered by a first member film 71 before impinging on the first member 16 and by a second member film 73 before impinging on the second member 18. The use of the first member and second member films 71, 73 produces a homogenized color appearance between the first and second members 16, 18 for the backlighting assembly 70. In this variation, the first member 16 has a third optical characteristic curve 79 and the second member 18 has fourth optical characteristic curve 80. The optical characteristics of the first member film 71 for the first member 16 is calculated based on the optical variance 82 which occurs when the third optical characteristic curve 79 has a higher transmittance percentage than the fourth optical characteristic curve 80 at a selected wavelength. The first member film 71 reduces the transmittance at a particular wavelength for the third optical characteristic curve to the transmittance rate of the fourth optical characteristic curve 80.

The optical characteristics for the second member film 73 are calculated from the optical variance 84 which occurs when the fourth optical characteristic curve 80 has a higher transmittance percentage than the third optical characteristic curve 79 at a selected wavelength. The second member film 73 reduces the transmittance of the fourth optical characteristic curve 80 to the transmittance rate of the third optical characteristic curve 79. The first member film 71 in cooperation with the first member 16 and the second member film 73 in cooperation with the second member 18 create a combined optical characteristic curve 86 for the first and second members 16, 18. This combined optical characteristic curve 86 produces a homogenized external light appearance for the first and second members 16, 18 when the light emitting device 12 is energized.

The foregoing description of various preferred embodiments have been presented for purposes of illustration and description. It is not intended to be exhaustive or to limit the invention to the precise forms disclosed, and obviously many modifications and variations are possible within the scope of the appended claims. The example embodiments, as described above, were chosen and described in order to best explain the principles of the invention and its practical application to thereby enable others skilled in the art to best utilize the invention in various embodiments and with various modifications as are suited to the particular use contemplated.

### PARTS LIST

10 - Backlighting Assembly according to the prior art
11 - Backlighting Assembly according to a first embodiment
12 - Light Emitting Device
14 - Beam of Light
16 - First Member
18 - Second Member
20 - Inner Surface of the Second Member
22 - Inner Surface of the First Member
24 - First External Beam of Light
26 - Second External Beam of Light
28 - Outer Surface of the First Member
30 - Outer Surface of the Second Member
32 - First Light spectrum Color
33 - Second Light spectrum Color
34 - First Optical Characteristic Curve
35 - Second Optical Characteristic Curve
36 - Film
37 - Optical Characteristic Variance
38 - Inner Surface of Film
40 - Modified Beam of Light
42 - Modified External Beam of Light
44 - Modified Light spectrum Color
50 - Backlighting Assembly according to a second embodiment
52 - First Film Layer
53 - Second Film Layer
54 - Inner surface of the First Film Layer
55 - Inner Surface of the Second Film Layer
56 - Modified Beam of Light
58 - Modified Beam of Light
60 - 102 - Backlighting Assembly according to a third embodiment
62 - 46 - First Member Recess
64 - 48 - Second Member Recess
70 - Backlighting Assembly according to a fourth embodiment
71 - First Member Film
72 - Inner Surface of First Member Film
73 - Second Member Film
74 - Inner Surface of Second Member Film
75 - First Modified Beam of Light
76 - First Modified External Beam of Light
77 - Second Modified Beam of Light
78 - Second Modified External Beam of Light
79 - Third Optical Characteristic Curve
80 - Fourth Optical Characteristic Curve
82 - Optical Variance
84 - Optical Variance
86 - Combined Optical Characteristic Curve

## Claims

1. A backlighting assembly (11) for a vehicle, comprising:
- a first member (16), wherein the first member (16) has a first optical characteristic curve (34) which is the transmittance percentage in function of the wavelength;
- a second member (18) adjacent to the first member (16), wherein the second member (18) has a second optical characteristic curve (35) which is the transmittance percentage in function of the wavelength, the second optical characteristic curve (35) differing from the first optical characteristic curve (34);
- the first member (16) and the second member (18) being arranged side by side;
- a film (36) adhered to the first member (16); and
- a light emitting device (12) emitting a beam of light (14), wherein the light emitting device (12) is positioned for a beam of light (14) to partially impinge on the second member (18) and partially impinge the film (36);
- wherein the film (36) provides light spectrum modification of the beam of light (14) from the light emitting device (12) across the visible light spectrum to create a modified beam of light (40) which impinges the first member (16); and
- wherein the light spectrum modification is determined from a transmittance variance between the first optical characteristic curve (34) of the first member (16) and the second optical characteristic curve (35) of the second member (18) such that a common light emitting device (12) can be used for both members (16,18) where the output transmitted light through the first and second members (16,18) has a homogenized appearance for an observer.

2. The backlighting assembly (11) according to claim 1 wherein the light spectrum modification is an optical characteristic to absorb and/or reflect a selected light spectrum.

3. The backlighting assembly (11) according claim 1 wherein the film (36) further comprises at least two film layers (52, 53) to provide the light spectrum modification.

4. The backlighting assembly (11) according to claim 1 wherein the first member (16) and the second member (18) are opaque with at least one light transmitting recess (62, 64) .

5. The backlighting assembly (11) according to claim 4, wherein the at least one light transmitting recess (62, 64) is a circle, triangle, arrow, logo, emblem or words.

6. The backlighting assembly (11) according to claim 1 wherein the light emitting device (12) is at least one light emitting diode (LED) source.

7. The backlighting assembly (11) according to claim 1 further comprising a second film (71) adhered to the second member (18), wherein the second film (71) provides a second light spectrum modification of the beam of light (14) from the light emitting device (12) to create a second modified beam of light (74) which impinges the second member (18).

8. The backlighting assembly (11) according to claim 1, wherein the first member (16) and the second member (18) are interior or exterior components.

## Patentansprüche

1. Hintergrundbeleuchtungsanordnung (11) für ein Fahrzeug, die aufweist:
- ein erstes Element (16), wobei das erste Element (16) eine erste optische Kennlinie (34) aufweist, die der prozentuale Transmissionsgrad in Abhängigkeit von der Wellenlänge ist;
- ein zweites Element (18), das zu dem ersten Element (16) benachbart ist, wobei das zweite Element (18) eine zweite optische Kennlinie (35) aufweist, die der prozentuale Transmissionsgrad in Abhängigkeit von der Wellenlänge ist, wobei sich die zweite optische Kennlinie (35) von der ersten optischen Kennlinie (34) unterscheidet;
- wobei das erste Element (16) und das zweite Element (18) nebeneinander angeordnet sind;
- einen Film (36), der an dem ersten Element (16) haftet; und
- eine lichtemittierende Einrichtung (12), die einen Lichtstrahl (14) emittiert, wobei die lichtemittierende Einrichtung (12) so positioniert ist, dass ein Lichtstrahl (14) teilweise auf das zweite Element (18) auftrifft und teilweise auf den Film (36) auftrifft;
- wobei der Film (36) eine Lichtspektrumsmodifikation des Lichtstrahls (14) von der lichtemittierenden Einrichtung (12) über das Spektrum des sichtbaren Lichts ermöglicht, um einen modifizierten Lichtstrahl (40), der auf das erste Element (16) auftrifft, zu erzeugen; und
- wobei die Lichtspektrummodifikation aus einer Transmissionsgradabweichung zwischen der ersten optischen Kennlinie (34) des ersten Elements (16) und der zweiten optischen Kennlinie (35) des zweiten Elements (18) bestimmt wird, so dass eine gemeinsame lichtemittierende Einrichtung (12) für beide Elemente (16, 18) verwendet werden kann, wobei das durch das erste und zweite Element (16, 18) gesendete Ausgangslicht für einen Beobachter ein homogenisiertes Erscheinungsbild aufweist.

2. Hintergrundbeleuchtungsanordnung (11) nach Anspruch 1, wobei die Lichtspektrummodifikation eine optische Eigenschaft, um ein ausgewähltes Lichtspektrum zu absorbieren und/oder reflektieren, ist.

3. Hintergrundbeleuchtungsanordnung (11) nach Anspruch 1, wobei der Film(36) zumindest zwei Filmschichten (52, 53) aufweist, um die Lichtspektrummodifikation bereitzustellen.

4. Hintergrundbeleuchtungsanordnung (11) nach Anspruch 1, wobei das erste Element (16) und das zweite Element (18) undurchsichtig mit zumindest einer lichtdurchlässigen Aussparung (62, 64) sind.

5. Hintergrundbeleuchtungsanordnung (11) nach Anspruch 4, wobei die zumindest eine lichtdurchlässige Aussparung (62, 64) ein Kreis, ein Dreieck, ein Pfeil, ein Logo, ein Emblem ist oder Wörter sind.

6. Hintergrundbeleuchtungsanordnung (11) nach Anspruch 1, wobei die lichtemittierende Einrichtung (12) zumindest eine Leuchtdioden (LED)-Quelle ist.

7. Hintergrundbeleuchtungsanordnung (11) nach Anspruch 1, die weiterhin einen zweiten Film (71), der an dem zweiten Element (18) haftet, aufweist, wobei der zweite Film (71) eine zweite Lichtspektrummodifikation des Lichtstrahls (14) von der lichtemittierenden Einrichtung (12) bereitstellt, um einen zweiten modifizierten Lichtstrahl (74), der auf das zweite Element (18) auftrifft, zu erzeugen.

8. Hintergrundbeleuchtungsanordnung (11) nach Anspruch 1, wobei das erste Element (16) und das zweite Element (18) innere oder äußere Komponenten sind.

## Revendications

1. Ensemble de rétro-éclairage (11) d'un véhicule comprenant :
- un premier élément (16), ce premier élément (16) ayant une première courbe de caractéristique optique (34) qui est le pourcentage de transmittance en fonction de la longueur d'onde,
- un second élément (18) adjacent au premier élément (16), le second élément (18) ayant une seconde courbe de caractéristique optique (35) qui est le pourcentage de transmittance en fonction de la longueur d'ondes, la seconde courbe de caractéristique optique (35) étant différente de la première courbe de caractéristique optique (34),
- le premier élément (16) et le second élément (18) étant disposés côte à côte,
- un film (36) étant collé sur le premier élément (16), et
- un dispositif photoémetteur (12) émettant un faisceau de lumière (14), le dispositif photoémetteur (12) étant placé pour qu'un faisceau lumineux (14) arrive en partie sur le second élément (18) et en partie sur le film (36),
- le film (36) modifiant le spectre lumineux du faisceau de lumière (14) du dispositif photoémetteur (12) dans le spectre visible pour créer un faisceau de lumière (40), modifiée qui arrive sur le premier élément (16), et
- la modification du spectre lumineux est déterminée par la variation de transmittance entre la première courbe de caractéristique optique (34) du premier élément (16) et la seconde courbe de caractéristique optique (35) au sein du second élément (18) de façon qu'un même dispositif photoémetteur (12) puisse être utilisé dans les deux éléments (16, 18), la sortie de la lumière transmise par le premier et le second éléments (16, 18) ayant un aspect homogène pour un observateur.

2. Ensemble de rétro-éclairages (11) selon la revendication 1,
dans lequel
la modification du spectre lumineux concerne la caractéristique optique pour absorber et/ou réfléchir un spectre de lumière choisi.

3. Ensemble de rétro-éclairages (11) selon la revendication 1,
dans lequel
le film (36) comporte en outre au moins deux couches de film (52, 53 pour modifier le spectre lumineux.

4. Ensemble de rétro-éclairages (11) selon la revendication 1,
dans lequel
le premier élément (16) et le second élément (18) sont opaques avec au moins une cavité de transmission de lumière (62, 64).

5. Ensemble de rétro-éclairages (11) selon la revendication 4,
dans lequel
au moins une cavité de transmission de lumière (62, 64) est un cercle, triangle, flèche, logo, emblème ou mots.

6. Ensemble de rétro-éclairages (11) selon la revendication 1,
dans lequel
le dispositif photoémetteur (12) et au moins une source à diode photoémissive (LED).

7. Ensemble de rétro-éclairages (11) selon la revendication 1, comprenant en outre :
un second film (71) collé au second élément (18), le second film (71) réalisant une seconde modification du spectre lumineux du faisceau lumineux (14) du dispositif photoémetteur (12) pour créer un second faisceau lumineux (74) modifié qui arrive sur le second élément (18).

8. Ensemble de rétro-éclairages (11) selon la revendication 1,
dans lequel
le premier élément (16) et le second élément (18) sont des composants intérieurs ou extérieurs.
